# EUROPEAN PATENT SPECIFICATION

(11) **EP 2 721 270 B1**
(45) Date of publication and mention of the grant of the patent: **28.08.2019**
(21) Application number: 12730112.5
(22) Date of filing: 15.06.2012
(51) Int. Cl.: F02B 77/02, F02B 77/04, F01L 3/04, F01N 3/10, F02F 3/14

(54) **METHOD AND APPARATUS FOR REDUCING EMISSIONS AND/OR REDUCING FRICTION IN AN INTERNAL COMBUSTION ENGINE**
VERFAHREN UND VORRICHTUNG ZUR EMISSIONSMINDERUNG UND/ODER REIBUNGSREDUZIERUNG IN EINEM VERBRENNUNGSMOTOR
PROCÉDÉ ET APPAREIL DE RÉDUCTION D'ÉMISSIONS ET/OU DE RÉDUCTION DE FROTTEMENT DANS UN MOTEUR À COMBUSTION INTERNE

(30) Priority: 15.06.2011 US 201161497187 P; 16.04.2012 US 201261624905 P
(43) Date of publication of application: 23.04.2014
(73) Proprietor: Henkel AG & Co. KGaA, 40589 Düsseldorf (DE)
(72) Inventor: DOLAN, Shawn, E., Sterling Heights, MI 48312 (US); GOLDING, James, P., 40476 Düsseldorf (DE)
(86) International application number: PCT/US2012/042681
(87) International publication number: WO 2012/174386

(56) References cited:
- JP-A- 11 236 677
- JP-B1- 3 603 961
- US-A1- 2005 061 680
- US-A1- 2008 022 962

## Description

### FIELD OF THE INVENTION

The invention relates to a method and apparatus for reducing at least one of HC, CO, and NOₓ emissions from an operating internal combustion engine fueled by hydrocarbon or similar fuels, such as alcohols, wherein a portion of the internal combustion chamber has aluminum and/ or titanium containing surfaces coated with a titanium dioxide coating, further comprising a dopant in and/or on the titanium dioxide coating. The invention also provides an engine comprising reduced friction titanium dioxide coated engine components and methods of making same.

### BACKGROUND OF THE INVENTION

Three major automotive pollutants are carbon monoxide (CO), unburned hydrocarbons (HC), and oxides of nitrogen (NOₓ). Gasoline, diesel and other hydrocarbon fuels contain hydrogen and carbon, as do similar organic fuels, such as alcohol-based fuels. Nitrogen, carbon dioxide and oxygen are all present in air. When air and these types of fuels are mixed and burned in internal combustion chambers, the by-products of combustion are partially burned fuel, carbon, carbon dioxide (CO₂), carbon monoxide (CO), and water vapor. Since the combustion process in the cylinders is rarely, if ever, 100% complete, some unburned fuels, for example hydrocarbons (HC), are left over in the exhaust gases. Oxides of nitrogen (NOₓ) are also formed and are thought to be caused by high cylinder temperature. If the combustion chamber temperatures are above 1,371 degrees Celsius, some of the oxygen and nitrogen combine to form NOₓ. In the presence of sunlight, HC and NOₓ join to form smog. A great deal of attention has been devoted to reducing internal combustion engine emissions of HC, CO, and NOₓ.

On many commercially available vehicles, catalytic converter devices are used to convert HC, CO and NOₓ to N₂, O₂, CO₂ and H₂O. Catalytic converter devices contain beads or honeycomb substrates, coated with a thin coating of platinum, palladium, or rhodium, and mounted in a container. They are typically installed downstream of the exhaust manifold and positioned between the exhaust manifold and the muffler. This means of reducing exhaust emissions has drawbacks. The metals used to coat the beads/honeycombs are expensive and lose their catalytic activity over time. Also, the catalytic converter device is typically located outside of the engine compartment underneath the vehicle where it is subject to damage from road hazards. Urea injection systems found on some diesel engines using Selective Catalytic Reduction (SCR) catalysts also have drawbacks. Injection of a reducing agent, for example urea or ammonia is necessary for proper function; thus a urea/ammonia source is required. Also, although urea is the safest reducing agent to store, it requires conversion to ammonia through thermal decomposition in order to be used as an effective reductant. There is thus a need for alternative or supplemental methods of reducing emissions of HC, CO, and NOₓ.

U.S. Pat. No. 3,697,091 describes bearing faces of ferrous metal compression and oil control piston rings of internal combustion engines having a plasma-applied, bearing face coating which consists essentially of about 75-90% aluminum oxide and 10-25% by weight titanium oxide. A ferrous metal piston ring coated with a plasma-applied coating of alumina and titania along with ferric oxide is disclosed in U.S. Pat. No. 4,077,637. In U.S. Pat. No. 4,115,959, a ferrous metal piston ring coated with a plasma-applied alumina-titania coating is described which further includes about 10-15% of an alkaline earth metal fluoride. Rings coated with alumina-titania plasma applied coatings have exhibited a tendency to flake or blister during engine operation. Blisters of about 1/16" diameter and 0.0001" thickness appear in the surface of the coating which is generally 0.004" thick. The blister material is then scuffed off and a loss of coating results. Delamination by blistering and spalling of portions of the coating is undesirable. Ceramic containing organic resin paints have also been used on pistons and cylinders to retain heat inside of the combustion chamber, which increases cylinder temperature. A downside of known thermal insulators is that high cylinder temperature causes NOₓ formation.

None of the above-described coatings has shown usefulness in reducing the amount of HC, CO, and NOₓ exhaust emissions from internal combustion engines. In addition, these coatings, including so-called ceramic coatings, thermal spray coatings and plasma assisted coatings are very expensive and are physically adhered, not chemically bonded to the surface, which results in adhesion problems, particularly during temperature cycling. Thermal spray coatings and plasma assisted coatings will be understood by those of skill in the art to mean coatings deposited by using a hot gas spray or gas plasma spray to carry a powder to a substrate where the powder is physically deposited onto the substrate. Also, traditional organic containing skirt coatings have poor wear and temperature resistance when compared to the present invention.

Engines comprising a combustion chamber with an aluminium base and coated with TiO2 are known for example from JP11236677, US2008/0022962 or JP2005248111.

### SUMMARY OF THE INVENTION

Applicants have found that coating portions of aluminum and/or titanium surfaces of an internal combustion engine and/or portions of the exhaust system, e.g. the exhaust manifold, which come in contact with intake air, fuel/air mix and /or exhaust gases with a titanium dioxide coating as described herein provides surprising reductions of at least one of HC, CO, and NOₓ emitted in downstream exhaust gasses.

One aspect of the invention provides an engine as defined in claim 1.

The engine may further comprise an exhaust system extending from the exhaust manifold to an exhaust pipe wherein at least a portion of internal surfaces of the exhaust system being aluminum, aluminum alloy, titanium or titanium alloy coated with said coating.

The engine may further comprise a combustion chamber having at least one aluminum, aluminum alloy, titanium or titanium alloy surface, at least a portion of said surface having deposited thereon a coating comprising at least 25 wt% TiO₂ in a layer thickness such that during operation of said engine exhaust gas emissions of HC, CO and/or NOₓ from the combustion chamber are less than said emissions from a like engine having no titanium dioxide coating on combustion chamber surfaces.

Except in the claims and the operating examples, or where otherwise expressly indicated, all numerical quantities in this description indicating amounts of material or conditions of reaction and/or use are to be understood as modified by the word "about" in describing the scope of the invention. Practice within the numerical limits stated is generally preferred, however. Also, throughout the description, unless expressly stated to the contrary: percent, "parts of", and ratio values are by weight or mass; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description or of generation in situ within the composition by chemical reaction(s) between one or more newly added constituents and one or more constituents already present in the composition when the other constituents are added; specification of constituents in ionic form additionally implies the presence of sufficient counter ions to produce electrical neutrality for the composition as a whole and for any substance added to the composition; any counter ions thus implicitly specified preferably are selected from among other constituents explicitly specified in ionic form, to the extent possible; otherwise, such counter ions may be freely selected, except for avoiding counter ions that act adversely to an object of the invention; the word "mole" means "gram mole", and the word itself and all of its grammatical variations may be used for any chemical species defined by all of the types and numbers of atoms present in it, irrespective of whether the species is ionic, neutral, unstable, hypothetical or in fact a stable neutral substance with well defined molecules; and the terms "solution", "soluble", "homogeneous", and the like are to be understood as including not only true equilibrium solutions or homogeneity but also dispersions.

### BRIEF DESCRIPTION OF THE DRAWING

Figure 1 shows a drawing of portions of a four stroke internal combustion engine in accordance with the invention, including a partial cross-sectional view of the engine area occupied by the combustion chamber of the engine.
Figures 2 and 3 show transmission electron micrographs of the external surface of tested titania coatings deposited on aluminum substrates by plasma electrolytic deposition according the invention at two different magnifications.
Figure 4 shows a micrograph of a fast ion bombardment cross-section through the aluminum substrate 400 and the titania coating 300, with pores 100, deposited on an aluminum substrate by plasma electrolytic deposition according the invention with a top coating of platinum 200.
Figure 5 shows a glow discharge optical emission spectroscopy (GDOES) of a 13-14 micron thick titania coating on aluminum having a vanadium dopant present in the electrolyte and deposited in the titania coating.
Figure 6 shows graphs of NOx emissions for coated cylinder heads at varied engine RPM and air / fuel ratios.

### DETAILED DESCRIPTION OF THE INVENTION

An aspect of the invention comprises a method and apparatus for reducing at least one of HC, CO, and NOₓ emissions from an operating internal combustion engine including a combustion chamber, wherein a portion of the internal combustion chamber has aluminum or titanium containing surfaces coated with adherent metal oxide, chemically bonded to the surfaces, containing titanium dioxide as described herein.

Suitable combustion chambers include rotors and rotor chambers of rotary engines and variable volume combustion chambers, for example two or four-stroke engine combustion chambers defined by a piston reciprocating within a cylinder between top and bottom center points and a cylinder head. The combustion chambers typically comprise an intake valve and an exhaust valve which may also be coated with titanium dioxide as described herein. The internal combustion engine may utilize any fuel that generates HC, CO, and/or NOₓ exhaust emissions upon combustion in air, e.g. organic fuels including alcohol-based and hydrocarbon fuels, such as gasoline, gasoline/oil mixtures, kerosene or diesel, and the like. The engine may use fuel injection, carburetor or other means of supplying fuel, known in the art. Spark plugs, glow plugs or other known means for igniting the fuel/air mixture in the combustion chamber may be used. A portion of surfaces of each combustion chamber has a surface coating of titanium dioxide deposited thereon which functions to increase decomposition rate of HC, CO, and/or NOₓ, and/or reduce formation rate of CO and/or NOₓ reaction products of combustion reactions taking place in the combustion chamber.

The general operation and construction of an engine having surface coatings for purifying an exhaust gas according to the present invention is that of a two or four stroke internal combustion engine or rotary internal combustion engine, which may be mounted on, for example, a motorized vehicle or other apparatus. Typically, such engines comprise multiple combustion chambers made up of multiple cylinders and a piston inserted in each cylinder, or at least one rotor chamber having at least one rotor installed in the rotor chamber. Optionally, the cylinder or rotor chamber may additionally comprise a liner as is known in the art. If a liner is present, a surface of the liner may be coated according to the invention instead of or in addition to a surface of the cylinder or rotor chamber.

An ignition source, such as a spark or glow plug, connected to an ignition circuit is provided for each combustion chamber in a manner known in the art and when actuated, ignites fuel/air mixture in the combustion chamber. In some engines, for example diesel engines, after initial start-up of the engine, the ignition source is compression of the fuel/air mixture. A fuel source, for example one or more fuel injection valves that directly inject fuel into a combustion chamber, is provided. In some embodiments, the direct fuel injection valve is replaced with port injection, a carburetor, a throttle body or similar device(s) that introduces a fuel or fuel/air mixture to the combustion chamber. The combustion chamber is in communication with a source of air, such as for example one or more air-intake passages, via an air-intake port. Typically an air-intake passage supplies drawn air to the combustion chamber of the engine. The section of the air-intake passage on the downstream side may diverge into independent passages, each of which corresponds to individual cylinders, in communication with the air-intake ports of the respective cylinders. An exhaust manifold for emitting exhaust gas from the combustion chamber communicates with the combustion chamber through an exhaust gas port. The exhaust manifold may be diverged at the upstream end into passages, each of which corresponds to individual cylinders and in communication with the combustion chamber of its respective cylinder via an exhaust gas valve through an exhaust gas port. In such an engine, the exhaust manifold may contain an exhaust passage for each exhaust port in the cylinder head, and the manifold is fitted against the exhaust port area of the cylinder head in a manner known in the art. The exhaust passages from each port in the manifold may join into a common single passage before they reach an manifold flange. An exhaust pipe is connected to the exhaust manifold flange.

The exhaust manifold conducts the exhaust gases from the combustion chambers to the exhaust pipe. Many exhaust manifolds are made from ferrous metal. Exhaust systems or portions thereof to be coated according to the invention may be aluminum, titanium, aluminum alloy, titanium alloy or may be another substrate having a layer of one of the aforesaid metals deposited thereon. The exhaust manifold, exhaust pipe and/or the tail pipe may be coated with a titanium dioxide coating according to the invention. In one embodiment, at least a portion of an interior surface of an exhaust manifold and/or an exhaust pipe is coated with a titanium dioxide coating as described herein..

Test data included herein demonstrates that operating characteristics of an internal combustion engine change between an engine having aluminum metal combustion chamber surfaces, and a similar or the same engine having combustion chambers with at least a portion of the aluminum surfaces covered with a titanium dioxide coating deposited as described herein. Furthermore, it was observed experimentally that combustion is positively affected by the presence of the titanium dioxide coating chemically deposited as described herein during engine tests in several ways. First, the coating provides a protective layer when used on pistons which extended the life of a high performance engine piston set by at least two-fold by protecting the piston crown from heat damage. Second, there was a reduction in noxious emission gases of CO, NOₓ and unburned hydrocarbons (HC) for an engine that was operated with pistons coated in titanium dioxide as described herein as compared to an aluminum combustion chamber engine operated in like circumstances with uncoated pistons. Third, for combustion chamber surfaces which move slidably in relation to each other, for example piston skirt portions and cylinder walls, a coating of titanium dioxide deposited as described herein provides improved adhesion of the coating and heat resistance as compared to conventional coatings, including physically adhered piston coatings deposited by thermal spray and plasma assisted spray techniques. Furthermore, when polished according to one aspect of the invention, the coating provides reduced static and dynamic friction as compared to the same coating in an unpolished state. The static and dynamic friction of a polished titanium dioxide surface was as good as or better than the diamond-like carbon (DLC) coatings recognized in the engine manufacturing industry as a performance benchmark for piston coatings.

The portion of each combustion chamber which may have a titanium dioxide coating includes a surface portion of the piston, for example the skirt and/or crown; the surface of the walls of the cylinder; surfaces of the intake and exhaust valves; a surface portion of the cylinder head exposed to the combustion chamber, and various combinations thereof. Other non-combustion chamber portions of the engine that may be coated include the air intake passages exhaust gas ports, and the exhaust system, meaning the exhaust manifold, exhaust pipe and tailpipe.

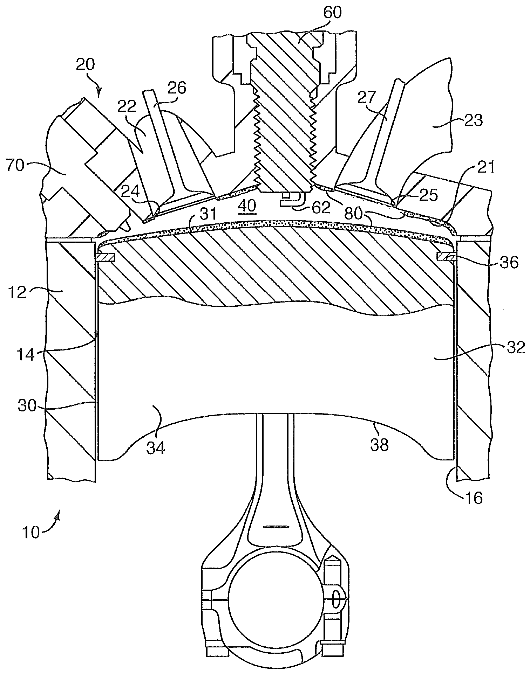

FIG. 1 shows aspects of one embodiment of the invention comprising an internal combustion engine 1 having surface coatings for purifying an exhaust gas, which is shown for illustrative purposes only and not for the purpose of limiting the invention. Purifying an exhaust gas will be understood in the context of this application to mean reducing concentration of HC, CO and/or NOₓ in exhaust gas emitted from an operating internal combustion engine. For exemplary purposes only, the internal combustion engine shown in FIG. 1 has a reciprocating piston which moves up and down in a cylinder, but the description of the invention can be readily understood to apply to a rotary engine as well.

In FIG. 1, the internal combustion engine 10 has an engine block 12 comprising at least one cylinder 14 formed in the engine block, an engine head 20 comprising a cylinder head 21, and a reciprocating piston 30 inserted in the cylinder 14. In FIG. 1, the walls 16 of the cylinder 14, the cylinder head 21 and the moveable piston 30 define a variable volume combustion chamber 40 in the engine. The reciprocating piston 30 comprises a crown portion 31, having a surface area exposed to the combustion chamber facing the cylinder head 21, and a body portion 32 which conforms to the cylinder 14 in which it reciprocates. The body portion 32 comprises a skirt portion 34, generally understood in the art to be that part of the piston 30 located between the first ring groove 36 and the bottom 38 of the piston 30. The skirt portion 34 comprises a bearing area in contact with the cylinder wall 16. The skirt portion 34 slides in relation to the cylinder wall 16 during reciprocating motion of the piston.

In this embodiment, an ignition plug 60 connected to an ignition circuit (not shown) is provided on the cylinder head 21 of the combustion chamber 40 in such a manner that the ignition electrode 62 faces the combustion chamber 40 and when actuated ignites the air-fuel mixture in the combustion chamber 40.

An injector (fuel injection valve) 70 that directly injects fuel to the combustion chamber 40 is provided; in this embodiment it is located in the engine head 20 on the rim of the combustion chamber 40. In some embodiments, the injector 70 is replaced with port injection, a carburetor, a throttle body or similar device(s) that introduces a fuel or fuel-air mixture to the combustion chamber. The various means of introducing fuel into a combustion chamber are known and not detailed herein.

The combustion chamber 40 is in communication with an air-intake passage 22 via an air-intake port 24 that is opened and closed by an air-intake valve 26. Likewise, the combustion chamber 40 is in communication with an exhaust passage 23 via an exhaust port 25 that is opened and closed by an exhaust valve 27. Flow of air through the air-intake port 24 is controlled by actuation of the air-intake valve 26 and flow of exhaust gases through the exhaust port 25 is controlled by actuation of the exhaust valve 27. The intake and exhaust valves have a combustion surface portion, 28, 29 respectively, that is exposed to the combustion chamber 40. Desirably, the engine head 20 comprises one or more air intake ports 24 which supply air drawn through the air-intake passage 22 to the combustion chamber 40 and one or more exhaust ports 25 through which exhaust gases egress from the combustion chamber. The exhaust passage 23 may merge with other such exhaust passages to form an exhaust manifold (not shown) which leads to a common exhaust pipe exiting the engine compartment. In FIG. 1, an emission reducing coating 80 of metal oxide comprising titanium dioxide according to the invention is shown on portions of the surfaces defining the combustion chamber, namely the cylinder head 21 and the crown portion 31 of the piston 30.

Based on the description herein, those of skill in the art will understand application and use of the invention in alternative embodiments of internal combustion engines such as two-stroke and rotary engines. In one alternate embodiment, a rotary engine, for example a so-called Wankel engine, having at least one rotor and at least one rotor chamber may have portions of the engine coated according to the invention. The rotary engine comprises intake and exhaust valves, intake ports, exhaust ports and an exhaust system as is known in the art. Each of the rotor chambers accommodates at least one rotor. The rotor is formed by a generally-triangular block, each side of which has a bulge at its central part when seen in the direction of the rotation axis. The rotor has, along its circumference, three generally-rectangular flank surfaces between apexes. The rotor has apex seals on its respective apexes, which move along the surfaces of the rotor chamber as the rotor moves around the rotation axis. These apex seals together with inner surfaces of the rotor chamber and the flank surfaces of the rotor define three working chambers inside the rotor chamber. The three working chambers move in a circumferential direction while each working chamber goes through the intake, compression, combustion, and exhaust operations, which respectively correspond to the intake stroke, the compression stroke, the combustion stroke, and the exhaust stroke of the reciprocating engine. Combustion takes place serially in the working chambers (combustion chambers) thereby turning the rotor. The rotor is geared in a manner known in the art such that as the rotor makes one rotation, it turns a shaft in communication with the rotor and generates rotational force, which is the engine output. Similar to the piston/cylinder engines, portions of the rotary engine that may be coated with a titanium dioxide coating to reduce emissions and improve efficiency according to the invention include surfaces that define the combustion chamber, namely a surface portion of the rotor, a surface portion of the rotor chamber; surfaces of the intake and exhaust valves; intake ports; exhaust ports; the exhaust system and various combinations thereof. In one embodiment, surfaces which define the working chambers of the engine may be coated. In another embodiment, additional portions of the engine that may be coated include air intake passages, exhaust gas ports, and the exhaust system, meaning the exhaust manifold, exhaust pipe and tailpipe.

There is no specific limitation on the aluminum, titanium, aluminum alloy or titanium alloy surface to be coated with the metal oxide, preferably titanium dioxide coating in accordance with the present invention. It is desirable for surfaces where the chemical deposition of the titanium dioxide coating is to be made electrolytically that the surfaces comprise a metal that contains not less than, in increasing order of preference, 30, 40, 50, 60, 70, 80, 90, 95, 100% by weight titanium or aluminum.

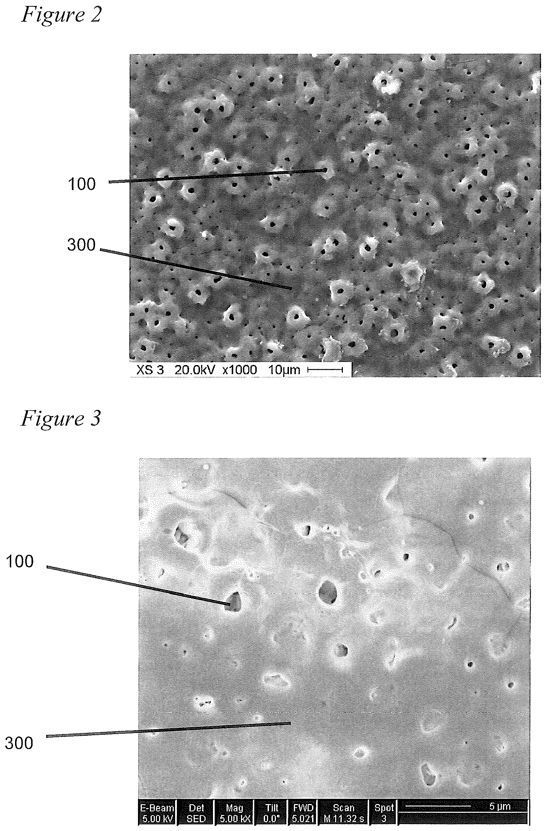

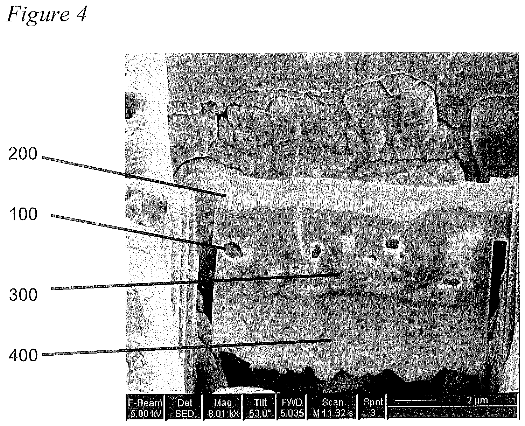

The metal oxide coating desirably comprises at least 1, 5, 10, 15, 20, 25, 30, 40, 50, 60, 70, 80, 90, 95, 99 wt% TiO₂. In some embodiments, the titanium dioxide coating is deposited electrolytically as described herein and exhibits an amorphous morphology comprising surface pores 100 which extend only partially into the coating layer 300. See Figure 2-4. These pores are useful for, among other things, increasing surface area of the coating and may assist in lubrication between the piston and cylinder walls in the combustion chamber. The surface area of the coating relates to the amount of titanium or other active metal in the coating that is available at the atmosphere/surface interface for contacting the fuel and exhaust compositions in the engine to effect reduction in concentration of HC, CO and NOₓ. Desirably, the metal oxide coating provides a surface area to a substrate that is in a range of about 20, 30, 40, 50, 60, 70, 80, 90, 100, 110, 120, 130, 140, 150, 160, 170, 180 times greater than the surface area of the substrate in an uncoated state. Greater surface area increases may be utilized provided that other characteristics of the coating, e.g. adhesion, are not reduced such that benefits of the invention are not achieved. In one embodiment, the titanium dioxide coating increased the surface area by 146 times versus a bare flat aluminum panel as measured using the BET method.

In one embodiment, the titanium dioxide layer further comprises phosphorus, present in amounts of, in increasing order of preference, less than 10, 5, 2.5, 1 wt% and in increasing order of preference, at least 0.0001, 0.0005, 0.001, 0.005, 0.01, 0.05, 0.1, 0.5 wt%. Other suitable additives may include effective amounts of other metals, and metal oxides of the periodic table such as iron, cobalt, zirconium and other transition metals. Also traditional catalyst metals such as platinum and the like may be included in the titanium dioxide coating provided that they do not interfere unduly with the objects of the invention.

The titanium dioxide surface coating is sufficiently adherent to the aluminum and titanium surfaces such that less than 10, 9, 8, 7, 6, 5, 4, 3, 2, 1, 0.5, 0.1, 0.01 % of the coated surface area show blistering, delamination, or peeling of the surface coating after, in increasing order of preference, 100, 150, 200, 250, 300, 350, 400, 450 500 hours of continuous operation of the internal combustion engine at, in increasing order of preference,50, 60, 70, 80, 90 or 100 % of maximum rpm under temperature and lubrication conditions within engine manufacturer's specifications. Test data shows that endurance race car pistons after 20,000 miles exhibited no soot build up or observable changes in the titanium dioxide coating. In one embodiment, the titanium dioxide surface coating shows less than 5, 4, 3, 2, 1, 0.5, 0.1, 0.01 % of the coated surface area show blistering, delamination, or peeling of the surface coating after 150 hours of continuous operation of the internal combustion engine at 100 % of maximum rpm under temperature and lubrication conditions within engine manufacturer's specifications.

The titanium dioxide coating is insoluble in engine coolant and lubricants and generally has an amorphous morphology. Desirably the titanium dioxide coating is resistant to thermal shock and thermal cycling such that no crazing or coating loss takes place when the coated surfaces are subjected to temperature cycling between -197 ° C and 550 ° C for at least in increasing order of preference of 1, 2, 3, 4, 5 cycles. Desirably the titanium dioxide coated surfaces exhibit thermal shock resistance to quenching in liquid nitrogen to -197° C from a peak metal temperature of 550 ° C. Temperature resistance was tested on aluminum pistons and found to be greater than 600°C, the titania coating was still adherent to the piston surface despite heat deformation of the piston.

In another test, resistance against thermal shocks was tested as follows, a substrate coated with titania according to the invention was maintained at 600°C for 84h, followed by a water quench at 5°C, thereafter the substrate was cross-hatched through the coating to the substrate and subjected to reverse impact testing. A coated control panel was also subjected to reverse impact testing. The results showed no loss of adhesion of the coating, showing that the Plasma Electrolytic Deposition of a titania coating on an aluminum substrate resulted in chemically adherent coating with flexibility and adherence that meets the ball reverse impact test both before and after thermal shock. This is a significant improvement in adhesion as compared to plasma-deposited and other physically adhered coatings.

Generally, the titanium dioxide coating is deposited in a uniform layer having a thickness of between 1 and 20 microns. Lower thicknesses may be utilized for economy, provided that the coating is not so thin as to lose emission reduction benefits of the invention. Thicknesses of the coatings are at least in increasing order of preference 1, 2, 3, 4, 5, 6, 7, 8 or 9 microns and not more than in increasing order of preference 20, 19, 18, 17, 16, 15, 14, 13, 12, 11, or 10 microns.

The titanium dioxide coating may optionally be polished to reduce friction between a first coated surface and a second surface that is coated or un-coated which may contact the first coated surface. In this embodiment, the surfaces to be coated are not limited to metal surfaces that contact intake air, fuel/air mixtures and/or exhaust, but may include internal or external wear surfaces. For this embodiment, the titanium dioxide coating is desirably deposited electrolytically such that the coating is chemically bonded to the metal surface. Suitable surfaces which may benefit from the coating are wear or contact surfaces of, for example, an engine, including plain bearings, rocker arms, cam shafts, and other bearing surfaces as well as piston skirts, cylinders or cylinder liners whose design and function are known in the art. Contact points between the two surfaces may be intermittent or continuous. The combination of the strongly adherent feature of the electrolytic coating and the polished surface of the coating provides a long lasting, low friction coating.

Polishing may remove from at least, in increasing order of preference, 1, 0.1, 0.01, or 0.001 wt% up to at most, in increasing order of preference, 90, 80, 70, 60, 50, 40, 30, 20, 10, 5, 2.5 wt% of the titanium dioxide coating. In one embodiment, approximately 5-15wt% of the coating is removed by polishing. In one embodiment, a polished coated surface has an Ra of 0.1 to 0.75 microns, desirably an Ra of 0.2 to 0.5 microns, where Ra is the average surface roughness calculated using measurements taken with standard contact or non-contact profilimetry devices.

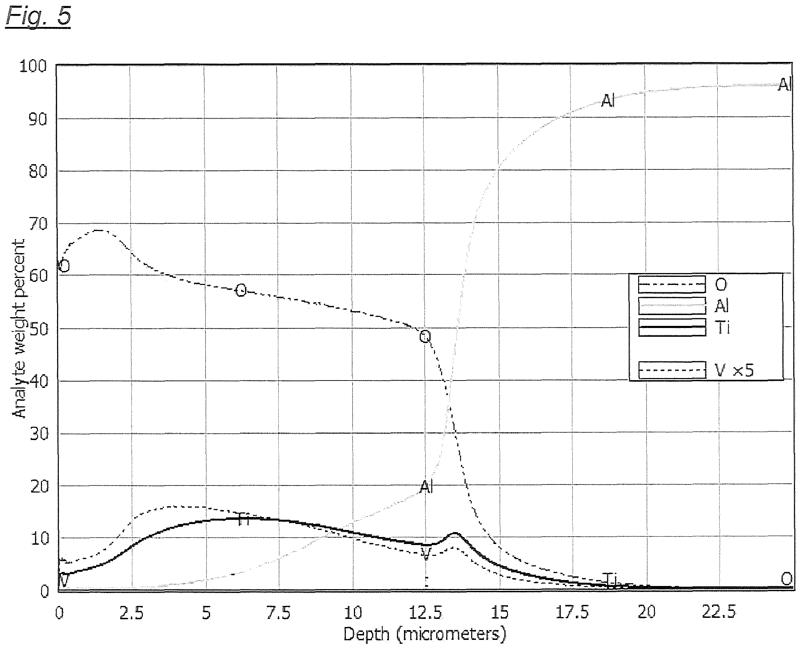

According to the invention, the titanium dioxide coating is deposited electrolytically. The electrolyte solution used comprises water, a water-soluble and/or water-dispersible phosphorus oxy acid or salt, for instance an acid or salt containing phosphate anion; and H₂TiF₆; H₂ZrF₆ is an optional ingredient. Preferably, the pH of the electrolyte solution is neutral to acid (more preferably, 6.5 to 2). The combination of a phosphorus-containing acid and/or salt and the complex fluoride in the electrolyte solution produced a different type of electrolytically deposited coating. The oxide coatings deposited comprised predominantly oxides of metals from anions present in the electrolyte solution prior to any dissolution of the metals in the metal surface on which the coating was being deposited. That is, this process results in coatings that result predominantly from deposition of substances that are not drawn from the surface being coated, resulting in less change to the substrate of the article being coated, see Figure 5. This feature is beneficial where the size and shape of engine components, which are typically designed within narrow tolerances, are not changed by the above-described coating process and the coating deposits uniformly and at a controlled thickness. In this embodiment, it is desirable that the electrolyte solution comprise the at least one complex fluoride, e.g. H₂TiF₆, and optionally H₂ZrF₆, in an amount of at least, in increasing order of preference 0.2, 0.4, 0.6, 0.8. 1.0, 1.2, 1.3, 1.4, 1.5, 2.0, 2.5, 3.0, 3.5 wt. % and not more than, in increasing order of preference 10, 9.5, 9.0, 8.5, 8.0, 7.5, 7.0, 6.5, 6.0, 5.5, 5.0, 4.5. 4.0 wt. %. The at least one complex fluoride may be supplied from any suitable source. The phosphorus oxysalt may be supplied from any suitable source such as, for example, ortho-phosphoric acid, pyro-phosphoric acid, tri-phosphoric acid, meta-phosphoric acid, polyphosphoric acid and other combined forms of phosphoric acid, as well as phosphorous acids and hypo-phosphorous acids, and may be present in the electrolyte solution in partially or fully neutralized form (e.g., as a salt, wherein the counter ion(s) are alkali metal cations, ammonium or other such species that render the phosphorus oxysalt water-soluble). Organophosphates such as phosphonates and the like may also be used (for example, various phosphonates are available from Rhodia Inc. and Solutia Inc.) provided that the organic component does not interfere with the electrolytic deposition. Preferred is the use of a phosphorus oxysalt in acid form. The phosphorus concentration in the electrolyte solution is at least 0.01 M. It is preferred that the concentration of phosphorus in the electrolyte solution be at least, in increasing order of preference, 0.01M, 0.015, 0.02, 0.03, 0.04, 0.05, 0.07, 0.09, 0.10, 0.12, 0.14, 0.16. In embodiments where the pH of the electrolyte solution is acidic (pH < 7), the phosphorus concentration can be 0.2 M, 0.3 M or more and preferably, at least for economy is not more than 1.0, 0.9, 0.8, 0.7, 0.6 M. A preferred electrolyte solution for use in forming a protective titanium dioxide coating according to this embodiment on an aluminum or titanium containing surface may be prepared using the following components:

| | |
|---|---|
| H₂TiF₆ | 0.05 to 10 wt. % |
| H₃PO₄ | 0.1 to 0.6 wt. % |
| Water | Balance to 100% |

In carrying out the electrolytic coating of engine components, the coating bath is maintained at a temperature between 0°C and 90° C. A pH adjuster may be present in the electrolyte solution; suitable pH adjusters include, by way of non-limiting example, ammonia, amine or other base. The amount of pH adjuster is limited to the amount required to achieve a pH of 1-6.5, preferably 2-6, most preferably 3-5.

The electrolytic coating process comprises immersing portions of the engine or articles having wear surfaces having aluminum and/or titanium containing surfaces that are to be coated with the titanium dioxide coating in the electrolytic coating solution, which is preferably contained within a bath, tank or other such container. The aluminum and/or titanium containing surfaces are connected as the anode and a second metal article or the tank itself is connected as the cathode. Electric current is passed between the cathode and anode through the electrolyte for a selected period of time sufficient to cause deposition of an adherent, amorphous titanium dioxide coating on the aluminum and/or titanium containing surfaces. The coated article is removed from the coating bath and rinsed. Other treatments may be performed thereafter to these surfaces prior to assembly, including polishing and /or painting. In depositing the titanium dioxide coating pulsed direct current is used.

In one embodiment, the current is pulsing direct current desirably used in the range of at least, in increasing order of preference 200, 250, 300, 350, 400 volts and at least for the sake of economy, not more than in increasing order of preference 1000, 900, 800, 700, 650, 600, 550 volts. The "off' time between each consecutive voltage pulse preferably lasts between 10% as long as the voltage pulse and 1000% as long as the voltage pulse. During the "off" period, the voltage need not be dropped to zero (i.e., the voltage may be cycled between a relatively low baseline voltage and a relatively high ceiling voltage). The baseline voltage thus may be adjusted to a voltage that is from 0% to 99.9% of the peak applied ceiling voltage. The current can be pulsed with either electronic or mechanical switches activated by a frequency generator. When using pulsed current, the average voltage is preferably not more than 500 volts, more preferably, not more than 450 volts, or, most preferably, not more than 400 volts, depending on the composition of the electrolyte solution selected. The peak voltage, when pulsed current is being used, is preferably not more than 1000, 900, 800, 700, 600, preferably 500, most preferably 400 volts. In one embodiment, the peak voltage for pulsed current is not more than, in increasing order of preference 600, 575, 550, 525, 500 volts and independently not less than 300, 310, 320, 330, 340, 350, 360, 370, 380, 390, 400 volts. The higher the concentration of the electrolyte in the electrolyte solution, the lower the voltage can be while still depositing satisfactory coatings.

Titanium dioxide coatings, as well as other metal oxide coatings, deposited electrolytically by the above-described method are chemically bonded to the metal surface and have increased surface area as compared to the uncoated aluminum panel. Desirably, the metal oxide coating has a surface area that is in a range of about 20, 30, 40, 50, 60, 70, 80, 90, 100, 110, 120, 130, 140, 150, 160, 170, 180 times greater than an uncoated flat aluminum panel surface. Greater surface area increases may be utilized provided that other characteristics of the coating, e.g. adhesion, are not reduced such that benefits of the invention are not achieved. The coating has insolubility in lubricant and coolant, adherence that is resistant to thermal cycling and thermal shock as described above, and wear resistance suitable for use in the combustion chamber and/or exhaust system with blistering, delamination and peeling resistance as described herein.

The invention may be practiced by coating all surfaces of an internal combustion engine that contact intake air, fuel/air mixture and/or exhaust gas during engine operation with the metal oxide containing titanium dioxide or only a portion of these surfaces. At least for economy's sake, it may be preferable to determine a target reduction in concentration of HC, CO or NOₓ in exhaust gas discharged, and coat a sufficient number of surfaces or surface area to achieve the reduction. As shown by the test data below, the operating parameters of the engine affect the emissions produced. It is desirable to determine the state of engine operating parameter(s) resulting in an emission value so that meaningful comparisons of emissions with and without the invention can be made to allow deposition of the coating on sufficient surfaces to effect the target reduction in concentration of at least one of HC, CO and NOₓ in exhaust gas discharged. Engine operating parameters include, by way of non-limiting example, engine speed, torque, load, exhaust gas recirculation (EGR) and indicated mean effective pressure (IMEP). According to one method of the invention, the method to reduce emissions from an operating internal combustion engine, comprises the steps of determining a state of an engine operating parameter corresponding to an emission value of at least one of HC, CO and NOₓ emitted from a combustion chamber of an operating internal combustion engine; determining a target reduction in concentration of at least one of HC, CO and NOₓ in exhaust gas discharged from the operating internal combustion engine corresponding to the state of the engine operating parameter corresponding to the emission value of at least one of HC, CO and NOₓ emitted from the combustion chamber of the operating internal combustion engine, wherein the concentration of the at least one of HC, CO and NOₓ is measured at a selected location in a path of the exhaust gas that is downstream from the combustion chamber; and depositing a titanium dioxide containing coating on a portion of surfaces of
a. the combustion chamber;
b. an air-intake passage in communication with the combustion chamber;
c. an exhaust passage in communication with the combustion chamber;
d. intake and/or exhaust valves; and/or
e. an exhaust manifold in communication with the exhaust passage; to effect said target reduction.

In one embodiment, piston skirts and/or cylinder walls, or the rotary chambers, coated with a titanium dioxide coating as described herein are subsequently polished to reduce surface roughness. The method of polishing the titanium dioxide surface comprises physically removing, at least in increasing order of preference 1, 2, 3, 4 or 5wt% and not more than in increasing order of preference 90, 80, 70, 60, 50, 40, 30, 20, 10wt% of the coating. Any known polishing means are suitable. One method for polishing comprises use of abrasive having a grit of less than in increasing order of preference 45, 40, 35, 30, 25, 20, 15, 10, 5, 4, 3, 2, 1 micron. The composition of the grit can be those known in the art, for example, diamond, cerium oxide, zirconium oxide, ferric oxide, silicon carbide and the like. In one embodiment, a polished coated surface is polished such that it has an Ra of 0.01, 0.05, 0.1, 0.15, 0.2, 0.25, 0.3 microns to not more than 0.4, 0.45, 0.5, 0.6, 0.7, 0.8, 1.0 microns.

In an alternative embodiment, the titanium dioxide coated internal surfaces of the engine may be subsequently coated with a secondary coating to provide additional desirable properties to coated internal surfaces of the engine. A non-limiting example includes dry film lubricants, such as graphite, molybdenum disulfide, polymer coatings containing graphite and/or molybdenum disulfide, fluoropolymers, silicones or waxes and titanium dioxide coatings deposited via Plasma-Assisted Layer Deposition (PALD) or thermal spray.

It has been surprisingly discovered that doping the titania coating with certain metals can improve NOx emissions even further. Doping, that is adding other elements or compounds to the titania coating, can be accomplished by adding soluble or finely dispersed solids to the electrolyte which may be deposited as or provide components incorporated as dopants in the titania coating or by adding a dopant after coating. Generally, any metal or metalloid element that provides a reduction in HC, CO or NOx in exhaust gases can be used provided that the compound or structure of a resulting dopant, containing the metal or metalloid element, that is in or on the titania is stable to the use environment e.g. temperatures and chemistries, such that it remains active. Examples of use environments include one or more of a combustion chamber, exhaust passages, exhaust manifold and downstream exhaust system components, upstream of any catalytic converter present, of an internal combustion engine.

Incorporating dopant into the titania coating during PED can be accomplished by doping the electrolyte with a liquid or a solid dopant generating composition. The liquid or solid dopant generating composition can be soluble or small particles of insoluble additives or substances that are easily decomposed to release metal or metalloids. The liquid or solid dopant generating composition is added to the electrolyte in an amount such that during PED, the dopant is deposited in or on the titania coating. Suitable examples of soluble dopant generating compositions include metals and metalloids of the Periodic Table and salts and oxides thereof, in particular transition metals including actinide and lanthanide series, for example cerium, silver, gold, platinum, palladium, rhodium, cobalt and/or vanadium. Small particles of insoluble additives such as nanoparticulate metals, metalloids and compounds thereof may be incorporated into the titania coating or into the pores thereof from the electrolyte. Suitable particulate compounds can be for example, nitrides, oxides, carbides , sulfides and the like. Particle diameters typically range from about less than in increasing order of preference 100, 90, 80, 70, 60, 50, 40 nanometers and as small as in increasing order of preference, 35, 30, 25, 20, 15, 10, 5, 4, 3, 2, or 1 nanometers.

Post-coating doping of the titania coating can be accomplished by contacting with a liquid or a solid dopant generating composition.

Liquid post-coating doping can be through deposition of a liquid additive that is dried in place, a reactive liquid that generates the dopant in situ (e.g. an alkoxy titanate can be used to generate a secondary titania have different properties or crystal structure in addition to the PED titania), or a liquid that is heat or otherwise treated to generate the dopant. For example, a liquid containing a metal nitrate may be applied and subsequently heated. The metal from the metal nitrate is effectively deposited into the titania matrix and the nitrate is driven off as oxides of nitrogen. Similar processes can be run using metal alkoxides and metal ligand systems.

Solid post-coating doping can be through deposition of a solid additive into the porous titania matrix or by generation of the dopant in situ. Suitable examples of solid post-coating doping include PVD, for example sputtering, CVD, for example radio frequency CVD, gas plasma CVD, shotblasting, burnishing, wiping. Particle diameters typically range from about less than in increasing order of preference 100, 90, 80, 70, 60, 50, 40 nanometers and as small as in increasing order of preference, 35, 30, 25, 20, 15, 10, 5, 4, 3, 2, or 1 nanometers.

Suitable examples of thus deposited dopants include metals and metalloids of the Periodic Table and oxides thereof. Transition metals including actinide and lanthanide series metals, in particular members of Groups 2-15, or Groups 3-12.

Substances that are easily oxidized include metal nitrates that will contribute metal oxides to the titania. Suitable examples of soluble substances include nitrates, acetates, alkoxy or other metal ligand systems capable of release of a metal or metalloid into the titania matrix.

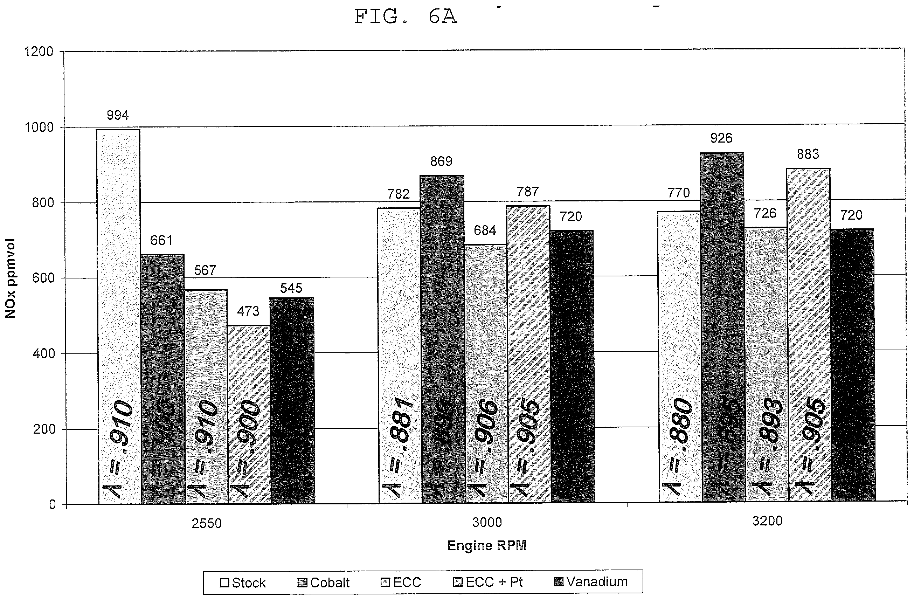

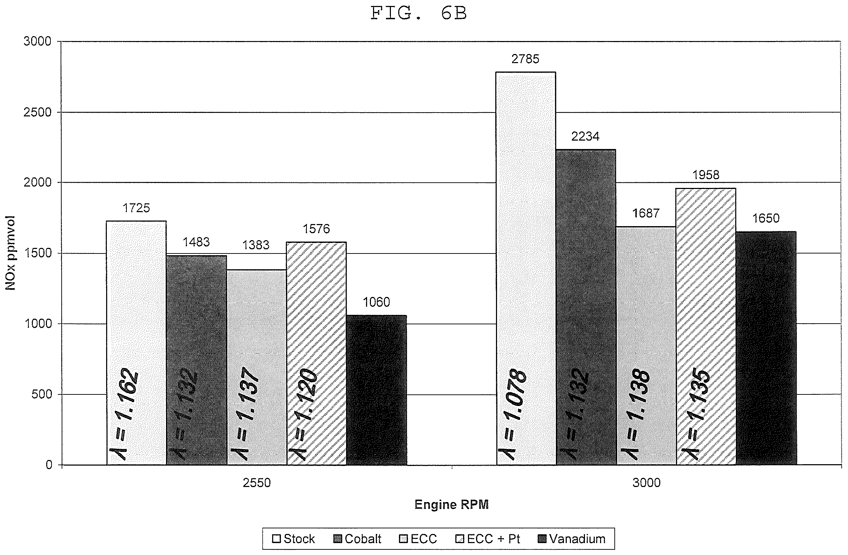

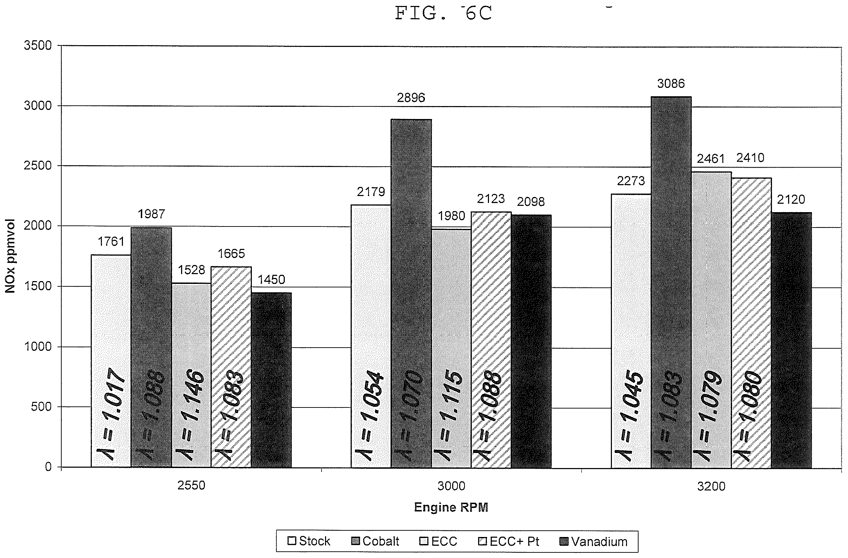

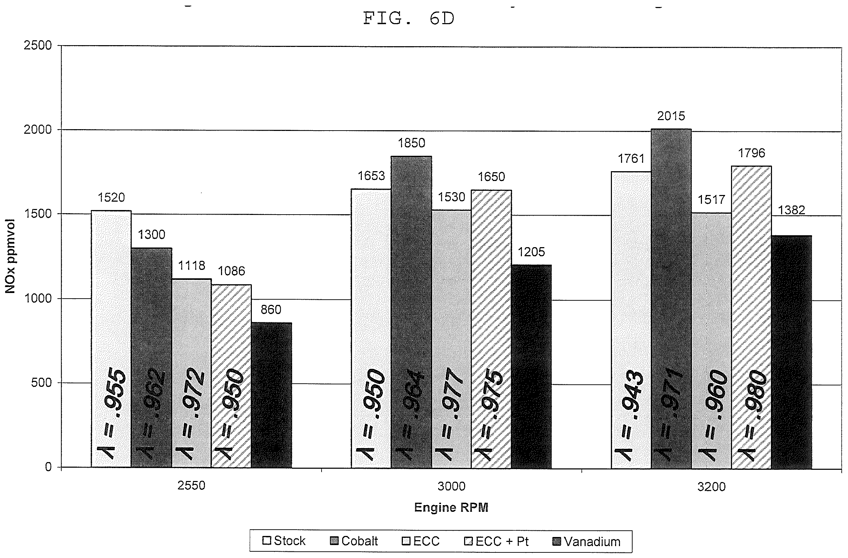

Applicants tested a stock aluminum cylinder head, a titania coated cylinder head and several cylinder heads wherein the titania coating further comprised one of the following metals: cobalt, platinum and vanadium on a four-stroke internal combustion engine, see Example 10 below. The results showed that doping the high surface area titania coating can further reduce NOx emissions as compared to either a stock aluminum cylinder head or a titania coated cylinder head, at lean, stoichiometric and rich air/fuel ratios, see Figure 6a - 6d.

### EXAMPLES

### Example 1: Coating internal surfaces

A commercially available V8 cast aluminum air intake component, identical to the cast aluminum air intake component of Comparative Example 1, was alkaline cleaned by immersion for 5 minutes in Ridoline 298, an alkaline cleaner commercially available from Henkel Corporation. The part was rinsed with water and was immersed in an aqueous electrolyte solution prepared using 20.0 g/L H₂TiF₆ (60%) and 4.0 g/L H₃PO₄. The pH was adjusted to 2.2 using aqueous ammonia. The article was subjected to electrolytic treatment for 3 minutes in the electrolyte solution using pulsed direct current having a peak ceiling voltage of 450 volts (approximate average voltage = 290 volts) at 90 °F. The "on" time was 25 milliseconds, the "off" time was 9 milliseconds (with the "off" or baseline voltage being 0% of the peak ceiling voltage). The average current density was 80 amps/ ft². No auxiliary electrodes were required; the counter electrodes were placed more than 13 inches from the outside of the part. The part was removed from the bath, rinsed with water and inspected. A uniform coating, 10 microns in thickness, was formed on the surface of the aluminum intake component. The coating was deposited over the entire air intake component, including the inside of the cooling tunnels and other areas of the casting. The coating was found to be predominantly titanium dioxide. Traces of phosphorus, less than 10% were also seen in the coating.

### Example 2: Gasoline Engine Air Intake Coating

A production small block Ford V-8 engine with standard cast aluminum air intake component was tested as a comparative uncoated example (Comparative Example 1). The titanium dioxide coated cast aluminum intake component of Example 1was installed on the V-8 engine in place of the stock intake and the tests were run again (Example 2). Results are shown below indicating an increase in horsepower and torque for the coated air intake component.

**Table 1**

| Substrate | Horsepower Max. RPM 5700 | Torque Max. RPM 4400 |
|---|---|---|
| Example 2, coated | 337.35 | 340.92 |
| Comparative Example 1, uncoated | 326. | 330. |
| Improvement %: | 3.3% | 3.3% |

The increase in horsepower and torque showed improved power from similar operating conditions tending to show improved utilization of fuel by the engine when the coated intake was used.

### Example 3: Thermal Shock

Two commercially available, after-market aluminum pistons for an automotive engine were obtained from the same supplier for comparative testing. One piston was bare aluminum and the second piston was substantially the same, but had an existing skirt coating based upon organic polymers mixed with solid film lubricants, see Example 3 and Comparative Example 2, respectively.

Example 3: The bare aluminum piston for an automotive engine was treated according to Example 1. The entire piston, including the wrist pin bore, skirt and top of the piston were uniformly coated with a layer of titanium dioxide. The piston did not require selective coating or any oven treatment, which is typically required to coat pistons having a conventional separate skirt coating. The coated piston was heated to 550° C for 16 hours and then immediately placed in 5° C water. The coating on the piston and the piston body were unaffected, i.e. unchanged, by the high temperature treatment and were also unaffected by the thermal shock test, i.e. no warpage, cracking, blistering delamination or crazing was observed.

Comparative Example 2: The aluminum piston having an existing skirt coating based upon organic polymers mixed with solid film lubricants was heated to 450 ° C. After 4 hours at 450° C, the conventional skirt coating was completely removed from the piston surface, leaving the bare aluminum substrate exposed.

### Example 4: Adhesion

Adhesion of metal oxide coating electrolytically deposited was conducted with and without secondary coatings applied.

### Example 4-1 Flat panels having electrolytic coating with secondary coating

For Examples 4A-D, clean desmutted 6063 aluminum alloy panels were coated, using an electrolyte solution prepared using H₂TiF₆ (60%) 20.0 g/L and H₃PO₄ (75%) 4.0 g/L. The panels were subjected to electrolytic coating treatment at pH 2 for 3 minutes in the electrolyte solution using pulsed direct current having a peak ceiling voltage of 450 volts (approximate average voltage = 130 volts) at 90 °F. The "on" time was 10 milliseconds, the "off" time was 30 milliseconds (with the "off" or baseline voltage being 0% of the peak ceiling voltage). A uniform coating, 7.6 microns in thickness, was formed on the surface of the aluminum-containing panels of Examples 4A-D. For Comparative Examples A-D, 6063 aluminum alloy panels were shot-blasted according to standard industry practice.

Each panel of Examples 4A-D and Comparative Examples A-D was then thermal spray coated using high velocity oxy-fuel (HVOF) with a thermal spray coating as disclosed in Table 2. Each panel was thereafter subjected to adhesion testing according to ASTM D3359 wherein the coatings were crosshatched and subjected to adhesion tests wherein commercially available 898 tape was firmly adhered to each film and then pulled off at a 90° angle to the surface. The results below show that the electrolytically deposited coating was not removed at all and that secondary layers of thermal spray, which are only physically adhered, had improved adhesion to the surfaces coated with the titanium dioxide.

**Table 2**

| Example | Electrodeposited Layer | Thermal Spray Applied Coating | Test Results from ASTM D 3359 |
|---|---|---|---|
| Comparative A | Shot blasted, no electrodeposited layer | Titania Thermal Spray - 99 wt % TiO₂ | 0B 100% loss of thermal spray coating |
| 4A | Electrodeposited TiO₂ Layer Present | Titania Thermal Spray - 99 wt % TiO₂ | 5B Perfect 0% loss |
| Comparative B | Shot blasted, no electrodeposited layer | Alumina Thermal Spray - 98.5 wt % Al₂O₃; 1.0 wt % SiO₂ | 0B 70% loss |
| 4B | Electrodeposited TiO₂ Layer Present | Alumina Thermal Spray - 98.5 wt % Al₂O₃; 1.0 wt % SiO₂ | 4B Less than 1% loss |
| Comparative C | Shot blasted, no electrodeposited layer | Zirconia Thermal Spray - 80 wt % ZrO₂; 20 wt % Y₂O₃ | 1B 50% loss |
| 4C | Electrodeposited TiO₂ Layer Present | Zirconia Thermal Spray - 80 wt % ZrO₂; 20 wt % Y₂O₃ | 4B Less than 1% loss |
| Comparative D | Shot blasted, no electrodeposited layer | 79 wt % Fe, 18 wt % Mo, 7.0 wt % C | 0B 70% loss |
| 4D | Electrodeposited TiO₂ Layer Present | 79 wt % Fe, 18 wt % Mo, 7.0 wt % C | 5B Perfect 0% loss |

### Example 4-2

### Reverse impact adhesion testing of flat panels having bare electrolytically deposited TiO₂coating

An aluminum alloy panel was first electrolytically coated with a titanium dioxide coating having film thickness of 8-12 microns. The test panel was then crosshatched per ASTM D3359 method B, down to the underlying aluminum surface. Reverse impact testing was performed per ASTM D2794 by directly impacting the back-side of the crosshatched area of the coated panel. Testing was performed at 110 in lb with a 4 lb weight. Then adhesion was checked using ASTM standard wide semi-transparent pressure sensitive tape. The subsequent tape pull revealed no loss of adhesion of the electrolytically deposited coating despite fracture of the panel at the cross-hatched area due to the impact testing.

### Example 4-3 Engine component, piston, having electrolytic TiO₂ coating with secondary coating

A commercially available, bare aluminum piston was coated as in Example 1. Thereafter, an aqueous mixture of 10% NeoRez® R9679 and 10% Aquagraph 6201 was applied to the coated piston to form a dry film seal to act as a lubricant to reduce the coefficient of friction and improve wear resistance in the event of a low or no oil event in the internal combustion engine. NeoRez® R9679 is an aliphatic aqueous colloidal dispersion of a urethane polymer containing 37% by weight solids (specific gravity of the solids is 1.16 and acid number of resin solids is 17.0), and is commercially available from Zeneca Resins, Inc., Wilmington, Massachusetts. Aquagraph 6201 is a commercially available aqueous graphite slurry. The sealant was dried on the coated piston at 190 °C for 5 minutes. The resin bonded dry film lubricant showed good adhesion to the coated piston; there was no flaking, peeling or blistering of the lubricant.

### Example 5: Diesel Engine Testing

A diesel fueled internal combustion engine having a variable volume combustion chamber defined by a piston, reciprocating within a cylinder between top and bottom points, and a cylinder head comprising two air-intake valves and two exhaust gas valves was selected for testing. The piston and head were aluminum alloy. The engine was operated without any titanium dioxide coating in the combustion chamber at various engine operating parameters including test speeds (rpm), IMEP and EGR with varied loading as described below, and noise level and emissions were measured (Control). Thereafter, the piston and the cylinder head of the engine were removed and the piston crown and cylinder head were treated according to Example 1 (Coated). The engine was reassembled and tested under the same operating conditions as the uncoated engine to allow for comparison of data. The results of the testing of coated and uncoated engines are shown in the tables below.

**Table 3**

| 2000 rpm | Uncoated | Coated |
|---|---|---|
| Engine sound level (dB) Noise | 88 | 87 |
| Indicated Efficiency (%) | 41.5 | 41.9 |
| CO (g/kWh) | 5.8 | 3.8 |
| HC (g/kWh) | 0.75 | 0.65 |
| NOₓ Emissions (ppm) | 152 | 148 |

Another engine operating parameter, percent of Emission Gas Recycling (EGR %) was varied across 40%, 43% and 46% at engine speed of 1500 rpm and 6.8 bar IMEP and carbon monoxide emissions (CO), hydrocarbon emissions (HC) and oxides of nitrogen (NOₓ) emissions were measured, see the table below.

**Table 4**

| EGR (%) | CO (g/kWh) | | HC (g/kWh) | | NOₓ Emissions (g/kWh) | | NOₓ Emission Reduction |
|---|---|---|---|---|---|---|---|
| | Uncoated | Coated | Uncoated | Coated | Uncoated | Coated | Coated |
| 40 | 2.85 | 2.7 | 0.64 | 0.55 | 0.65 | 0.61 | 6% |
| 43 | 3.3 | 3.3 | 0.66 | 0.58 | 0.49 | 0.43 | 8.8% |
| 46 | 4.2 | 3.9 | 0.7 | 0.6 | 0.30 | 0.29 | 2% |

The above table shows significant reductions in HC and NOₓ emissions.

EGR (%) was varied across 38% and 41% at engine speed of 1500 rpm and 4.3 bar IMEP and additional measurements of CO, HC and NOₓ emissions were taken. At 41% EGR the CO and HC emissions were similar, and within experimental error of each other for coated and uncoated. At 38% EGR, the samples showed less CO and HC emissions for the coated sample. Surprising reductions in NOₓ emissions at both EGR values were noted when the engine with coating was compared to the engine without the coating, see the table below.

**Table 5**

| EGR (%) | NOₓ Emissions (g/kWh) | | NOₓ Emission Reduction |
|---|---|---|---|
| | Uncoated | Coated | Coated |
| 38 | 0.95 | 0.65 | 31% |
| 41 | 0.69 | 0.40 | 42% |

Test results also showed that for engine speed of 1500 rpm and 4.3 bar IMEP, the engine having the titanium dioxide coated parts had higher percentage efficiency where both engines were tested under comparable conditions. Specifically, the engines were tested at substantially the same values over a range of engine operating parameters including relative air/fuel ratio, mass flow of humid air and EGR %s; for measured amounts of NOₓ emissions ranging from 0.1 g/kWh to 2.0 g/kWh, the coated engine parts delivered greater indicated efficiency percents at NOₓ emissions of 0.3 g/kWh and above. These efficiencies amounted to greater than 1% improvement in engine efficiency.

### Example 6: Gasoline Engine Testing

An LE5 four cylinder automotive gasoline (unleaded) engine was used for testing using a dynamometer calibration from a corresponding production vehicle. The engine was a 2.4L port-injected engine with variable valve timing having cast aluminum block. Two sets of parts were tested, each set consisting of four pistons and a head made of aluminum. One set of parts was coated according to Example 1 (coated). A second set of parts was an essentially unmodified production engine set (control) and provides a Comparative Example. The valve seats in the head of the coated part set were modified from stock design to accommodate the thickness of the coating. The same modification was made to the valve seats of the uncoated head. Both heads had similar flow characteristics. The same engine was used for testing both sets of parts to reduce variations from engine to engine. The engine was connected to a dynamometer equipped with a controller and exhaust missions were measured using an emission measurement apparatus commercially available from Horiba Instruments Inc., using the following procedure: Engine emissions from the fully warmed up engine were evaluated. Seven different speed and load points were evaluated which are representative of the operation of the engine over a FUDS cycle which is used to evaluate emissions for urban driving in the United States. The dynamometer was operated at the target speed in speed control mode. The engine throttle was controlled to maintain constant torque. The engine was allowed to reach a stable condition before measurements were taken. The engine was swept through a number of different equivalence ratios while emissions were recorded for a sixty second period at 100 Hz.

The results below compare the data from running the engine with the uncoated "control" parts using commercially available oil without Moly (Comparative Example) to data from running the engine with the "coated" parts using Moly oil. Moly oil was commercially available motor oil containing oil soluble molybdenum compositions. The detailed data was analyzed to determine the emissions concentrations at an equivalence ratio of 1.0 which is the target EQR for a stoichiometric engine. Summary results for each point at an EQR of 1.0 are provided below.

**Table 6**

| **Total Exhaust Hydrocarbon Concentration (ppm) for Coated Parts (Example) and Control (Comparative Example) Parts** | | | | | | | |
|---|---|---|---|---|---|---|---|
| | 1000 rpm, 30 kPa | 1600 rpm, 20 kPa | 1600 rpm, 60 Kpa | 1600 rpm, WOT | 2200 rpm, 20 Kpa | 2200 rpm, 60 kPa | 2200 rpm, WOT |
| control | 3000 | 2200 | 1800 | 1050 | 1800 | 1600 | 900 |
| coated | 1500 | 1900 | 1800 | 1050 | 1100 | 1100 | 800 |

**Table 7**

| **Carbon Monoxide Concentration (%) for Coated Parts (Example) and Control (Comparative Example) Parts** | | | | | | | |
|---|---|---|---|---|---|---|---|
| | 1000 rpm, 30 kPa | 1600 rpm, 20 kPa | 1600 rpm, 60 Kpa | 1600 rpm, WOT | 2200 rpm, 20 Kpa | 2200 rpm, 60 kPa | 2200 rpm, WOT |
| control | 2.2 | 0.8 | 0.5 | 1.4 | 0.75 | 0.6 | 0.5 |
| coated | 1.4 | 0.5 | 0.6 | 0.5 | 0.75 | 0.6 | 0.4 |

**Table 8**

| NOₓ **Concentration (ppm) for Coated Parts (Example) and Control (Comparative Example) Parts** | | | | | | | |
|---|---|---|---|---|---|---|---|
| | 1000 rpm, 30 kPa | 1600 rpm, 20 kPa | 1600 rpm, 60 Kpa | 1600 rpm, WOT | 2200 rpm, 20 Kpa | 2200 rpm, 60 kPa | 2200 rpm, WOT |
| control | 1100 | 1400 | 3200 | 2050 | 1600 | 3000 | 2400 |
| coated | 1000 | 1250 | 2600 | 1300 | 800 | 1800 | 1600 |

The results in the foregoing three tables demonstrate the coated engine producing reduced amounts of HC, CO and NOₓ in exhaust emissions as compared to the engine in the uncoated state.

### Example 7: Surface area testing

For this experiment, an aluminum-sample 1cm x 2cm (thickness 0.8 mm) was coated on both sides according to the procedure of Example 1, resulting in an approximately 10 µm thick coating comprising predominantly titanium dioxide with traces of phosphorus, less than 10%.

The dry, coated sample was weighed. Liquid nitrogen was adsorbed on the surface of the coated sample. The sample was then heated and re-weighed. The weight loss (caused by desorbing nitrogen) was determined. From the amount of desorbing nitrogen, the specific surface area that was covered by nitrogen was calculated by the BET method. This value was compared to the geometrical surface area of the sample determined by the sample dimensions. The coating increased the surface area by 146x (times) equal to 14,600% versus a bare flat panel.

### Example 8: Gasoline Engine Testing

Emissions of coated parts from Example 6 were retested and compared to those of stock parts using the test procedure of Example 6, modified in that the engine controller was used to operate the engine in a normal closed-loop control mode. The emission results are shown in Tables on the next page.

On average, the coated part set showed a 3% reduction in the carbon monoxide emissions, 13% reduction in the hydrocarbon emissions, and a 32% reduction in the NOₓ emissions compared to the stock part set.

### Example 8 Tables

**Table 9: Total Hydrocarbon (ppm) Results for Coated Parts and Stock Parts**

| | 1840 rpm, 11ft-lb | 1840 rpm, 115 ft-lb | 1698 rpm, 70ft-lb | 1698 rpm, 112ft-lb | 2125 rpm, 22 ft-lb, | 2125 rpm, 75ft-lb | 1698 rpm, 100ft-lb | 2268 rpm, 95ft-lb | 1413 rpm, 70ft-lb | 1413 rpm, 113ft-lb | 1555 rpm, 38ft-lb | 1983 rpm, 110ft-lb | 1555 rpm, 114ft-lb | 1840 rpm, 72ft-lb | 1983 rpm, 66ft-lb | 1555 rpm, 51ft-lb |
|---|---|---|---|---|---|---|---|---|---|---|---|---|---|---|---|---|
| Stock | 2269 | 1748 | 1347 | 1414 | 3131 | 1194 | 1075 | 984 | 1325 | 805 | 1690 | 1357 | 1222 | 1642 | 1499 | 1417 |
| Coated | 2700 | 1505 | 1153 | 1151 | 1710 | 1028 | 1042 | 911 | 1224 | 881 | 1409 | 1080 | 1155 | 1162 | 1104 | 1201 |

**Table 10: Carbon Monoxide (%) Results for Coated Parts and Stock Parts**

| | 1840rpm, 11 ft-lb | 1840 rpm, 115 ft-lb | 1698 rpm, 70 ft-lb | 1698 rpm, 112 ft-lb | 2125 rpm, 22 ft-lb | 2125 rpm, 75 ft-lb | 1698rpm, 100 ft-lb | 2268 rpm, 95 ft-lb | 1413 rpm, 70 ft-lb | 1413 rpm, 113 ft-lb | 1555 rpm, 38 ft-lb | 1983 rpm, 110 ft-lb | 1555 rpm, 114 ft-lb | 1840 rpm, 72 ft-lb | 1983 rpm, 66 ft-lb | 1555 rpm, 51 ft-lb |
|---|---|---|---|---|---|---|---|---|---|---|---|---|---|---|---|---|
| Stock | 0.70 | 4.73 | 0.59 | 0.75 | 0.64 | 0.51 | 0.52 | 0.69 | 0.48 | 0.63 | 069 | 3.69 | 0.65 | 0.64 | 0.61 | 0.74 |
| Coated | 0.62 | 3.39 | 0.53 | 0.57 | 0.52 | 0.59 | 0.59 | 0.89 | 0.65 | 0.71 | 0.63 | 8.69 | 0.67 | 0.60 | 0.59 | 0.69 |

**Table 11: NOₓ Results for Coated Parts and Stock Parts**

| | 1840 rpm, 11 ft-lb | 1840 rpm, 115 ft-lb | 1698 rpm, 70 ft-lb | 1698 rpm, 112 ft-lb | 2125 rpm, 22 ft-lb | 2125 rpm, 75 ft-lb | 1698 rpm, 100 ft-lb | 2268 rpm, 95 ft-lb | 1413 rpm, 70 ft-lb | 1413 rpm, 113 ft-lb | 1555 rpm, 38 ft-lb | 1983 rpm, 110 ft- b | 1555 rpm, 114 ft-lb | 1840 rpm, 72 ft-lb | 1983 rpm, 66 ft-lb | 1555 rpm, 51 ft-lb |
|---|---|---|---|---|---|---|---|---|---|---|---|---|---|---|---|---|
| Stock | 511 | 696 | 2323 | 2914 | 123 | 2023 | 2369 | 1823 | 1490 | 1803 | 2933 | 3432 | 2702 | 3876 | 3165 | 3206 |
| Coated | 182 | 704 | 1624 | 2033 | 104 | 1653 | 1776 | 1484 | 840 | 776 | 1955 | 2343 | 1485 | 2760 | 2099 | 2046 |

### Example 9 Friction Reduction

Three aluminum alloy panels were selected for friction comparisons:
- a panel having a titanium dioxide coating as-deposited per Example 1;
- a panel having a titanium dioxide coating as-deposited per Example 1 and subsequently polished using fine grain abrasive of less than 300 grit and
- as a benchmark, a panel coated with a commercially available diamond like carbon coating (DLC) used in coating metal substrates for high performance, low friction applications.
Each panel was subjected to friction testing per ASTM 1894 (2008) procedure with the test panel sample as the sled and a 4x12 iron substrate as the mating surface. The test results are shown in the table below.

**Table 12**

| Coating | Static Friction | Dynamic Friction |
|---|---|---|
| Titanium Dioxide Coating Unpolished | 0.3925 | 0.3786 |
| Titanium Dioxide Coating polished | 0.1991 | 0.1948 |
| Diamond like carbon coating (DLC) | 0.2039 | 0.2003 |

The above test results show that the polished titanium dioxide coating has coefficient of friction equal to or better than the commercially available coating both in static and dynamic friction tests.

### Example 10 Doping of Titania Coating

Five aluminum alloy cylinder heads for a four stroke gasoline internal combustion engine were selected for dopant testing. One cylinder head was left uncoated. A second cylinder was coated according to the invention with titania coating. A third cylinder head was coated according to the invention with the addition of 10 g/l cobalt carbonate dissolved in the electrolyte. The fourth cylinder head, after coating with titania coating and drying, was burnished with 50 nanometer Pt powder. This nanoparticulate powder was rubbed into the dried titania coating using a wool polishing wheel resulting in deposition in the pores and on surface of the titania of about 0.2 grams of 50 nanometer Pt powder. A fifth cylinder head was coated according to the invention with the addition of 10 g/l sodium ammonium decavanadate dissolved in the electrolyte.

The coated cylinder heads were assembled and tested serially, meaning one after the other sequentially in time, into the same four stroke engine, which did not have a catalytic converter attached. With each coated cylinder head, the engine was operated at various RPMs, under 80 to 100 percent load, and varied air/fuel ratios as shown in Fig. 6a-6d. Emissions were tested downstream of the combustion chamber at each engine operating parameter, for each coated cylinder head. Test results showed reduction in NOx emissions at lean, stoichiometric and rich fuel mixtures can be achieved by addition of vanadium to the titanium dioxide coating.

Although the invention has been described with particular reference to specific examples, it is understood that modifications are contemplated. Variations and additional embodiments of the invention described herein will be apparent to those skilled in the art without departing from the scope of the invention as defined in the claims to follow. The scope of the invention is limited only by the breadth of the appended claims.

## Claims

1. An internal combustion engine comprising:
external surfaces and internal surfaces, said internal surfaces comprising a group of internal surfaces located on at least one of a combustion chamber, an air intake passage, an exhaust passage, an exhaust manifold, a valve and combinations thereof; at least a portion of said group of internal surfaces being metal selected from aluminum, aluminum alloy, titanium or titanium alloy; and at least some portions of the metal being coated metal surfaces having a chemically adherent coating comprising TiO₂, said coated metal surfaces positioned such that, during operation of said engine, intake air, fuel/air mixture and/or exhaust gas contact said chemically adherent coating thereby increasing decomposition rate of HC, CO or NOₓ and/or reducing formation rate of CO or NOₓ emissions resulting from combustion in the combustion chamber, wherein said chemically adherent coating is obtainable through plasma electrolytic deposition from an electrolyte solution comprising water, a water-soluble and /or water-dispersible phosphorus oxy acid or salt and H₂TiF₆ wherein the portions of the metal being coated are connected as the anode and pulsed direct current is used.

2. The engine of claim 1 further comprising an exhaust system extending from the exhaust manifold to an exhaust pipe wherein at least a portion of internal surfaces of the exhaust system being aluminum, aluminum alloy, titanium or titanium alloy coated with said chemically adherent coating.

3. The engine according to any one claims 1-2 comprising a combustion chamber having at least one aluminum, aluminum alloy, titanium or titanium alloy surface, at least a portion of said surface having deposited thereon a coating comprising at least 25 wt% TiO₂ in a layer thickness such that during operation of said engine exhaust gas emissions of HC, CO and/or NOₓ from the combustion chamber are less than said emissions from a like engine having no titanium dioxide coating on combustion chamber surfaces.

4. The engine according to any one claims 1-3, wherein the coated metal surfaces having a chemically adherent coating comprising TiO₂ are polished surfaces having an Ra of 0.01 to 1.0 micron.

5. The engine according to any one claims 1-4, further comprising a dopant in and/or on the chemically adherent coating comprising TiO₂.

6. Use of a chemically adherent coating comprising TiO₂ on internal combustion engine internal surfaces comprising aluminum or titanium and positioned such that, during operation of said engine, intake air, fuel/air mixture and/or exhaust gas contact said chemically adherent coating comprising TiO₂ to thereby increase decomposition rate of HC, CO or NOₓ and/or reduce formation rate of CO or NOₓ emissions resulting from combustion in the engine, wherein said chemically adherent coating is obtainable through plasma electrolytic deposition from an electrolyte solution comprising water, a water-soluble and /or water-dispersible phosphorus oxy acid or salt and H₂TiF₆ wherein the portions of the metal being coated are connected as the anode and pulsed direct current is used.

## Patentansprüche

1. Verbrennungsmotor, umfassend:
Außenoberflächen und Innenoberflächen, wobei die Innenoberflächen eine Gruppe von Innenoberflächen umfassen, die sich auf einer Verbrennungskammer, einem Luftansaugkanal, einem Auslasskanal, einem Abgaskrümmer, einem Ventil und/oder Kombinationen davon befinden; wobei mindestens ein Teil der Gruppe von Innenoberflächen Metall ist, das aus Aluminium, Aluminiumlegierung, Titan oder Titanlegierung ausgewählt ist; und wobei mindestens einige Teile des Metalls beschichtete Metalloberflächen mit einer chemisch haftenden, TiO₂-umfassenden Beschichtung sind, wobei die beschichteten Metalloberflächen derart positioniert sind, dass während eines Betriebs des Motors Ansaugluft, eine Kraftstoff/Luft-Mischung und/oder Abgas mit der chemisch haftenden Beschichtung in Berührung kommen, wobei dadurch eine Zersetzungsgeschwindigkeit von HC, CO oder NOₓ erhöht wird und/oder eine Ausbildungsgeschwindigkeit von durch Verbrennung in der Verbrennungskammer entstehenden CO- oder NOₓ-Emissionen reduziert wird, wobei die chemisch haftende Beschichtung durch eine plasmaelektrolytische Abscheidung von einer Elektrolytlösung, die Wasser, eine wasserlösliche und/oder wasserdispergierbare Oxosäure des Phosphors oder Salz und H₂TiF₆ umfasst, erhältlich ist, wobei die Teile des Metalls, die beschichtet sind, als die Anode verbunden sind und Impulsgleichstrom verwendet wird.

2. Motor nach Anspruch 1, ferner umfassend ein Abgassystem, das sich von dem Abgaskrümmer hin zu einem Abgasrohr erstreckt, wobei mindestens ein Teil der Innenoberflächen des Abgassystems Aluminium, Aluminiumlegierung, Titan oder Titanlegierung ist, die mit der chemisch haftenden Beschichtung beschichtet sind.

3. Motor nach einem der Ansprüche 1-2, umfassend eine Verbrennungskammer, die mindestens eine Aluminium-, Aluminiumlegierungs-, Titan- oder Titanlegierungsoberfläche aufweist, wobei mindestens ein Teil der Oberfläche darauf eine Beschichtung abgeschieden aufweist, die mindestens 25 Gew.-% TiO₂ in einer Schichtdicke derart umfasst, dass während des Betriebs des Motors Abgasemissionen von HC, CO und/oder NOₓ von der Verbrennungskammer weniger sind als die Emissionen von einem gleichartigen Motor, der keine Titandioxidbeschichtung auf Verbrennungskammeroberflächen aufweist.

4. Motor nach einem der Ansprüche 1-3, wobei die beschichteten Metalloberflächen, die eine chemisch haftende, TiO₂ umfassende Beschichtung aufweisen, polierte Oberflächen sind, die einen Mittenrauwert von 0,01 bis 1,0 Mikrometer aufweisen.

5. Motor nach einem der Ansprüche 1-4, ferner umfassend einen Dopanten in und/oder auf der chemisch haftenden, TiO₂ umfassenden Beschichtung.

6. Verwenden einer chemisch haftenden Beschichtung, umfassend TiO₂ auf Innenoberflächen eines Verbrennungsmotors, die Aluminium oder Titan umfassen und derart positioniert sind, dass während des Betriebs des Motors Ansaugluft, eine Kraftstoff/Luft-Mischung und/oder Abgas mit der chemisch haftenden, TiO₂-umfassenden Beschichtung in Berührung kommen, wobei dadurch die Zersetzungsgeschwindigkeit von HC, CO oder NOₓ erhöht wird und/oder die Ausbildungsgeschwindigkeit von durch Verbrennung in dem Motor entstehenden CO- oder NOₓ-Emissionen reduziert wird, wobei die chemisch haftende Beschichtung durch eine plasmaelektrolytische Abscheidung von einer Elektrolytlösung, die Wasser, eine wasserlösliche und/oder wasserdispergierbare Oxosäure des Phosphors oder Salz und H₂TiF₆ umfasst, erhältlich ist, wobei die Teile des Metalls, die beschichtet sind, als die Anode verbunden sind und Impulsgleichstrom verwendet wird.

## Revendications

1. Moteur à combustion interne comprenant :
des surfaces externes et des surfaces internes, lesdites surfaces internes comprenant un groupe de surfaces internes situées sur au moins l'une d'une chambre de combustion, un passage d'admission d'air, un passage d'échappement, un collecteur d'échappement, une soupape et leurs combinaisons ; au moins une partie dudit groupe de surfaces internes étant métallique choisie parmi l'aluminium, l'alliage d'aluminium, le titane ou l'alliage de titane ; et au moins certaines parties du métal étant des surfaces métalliques revêtues ayant un revêtement chimiquement adhérent comprenant du TiO₂, lesdites surfaces métalliques revêtues étant disposées de telle sorte que pendant le fonctionnement dudit moteur, de l'air d'admission, du mélange air/carburant et/ou du gaz d'échappement viennent au contact dudit revêtement chimiquement adhérent, augmentant ainsi le taux de décomposition de HC, de CO ou de NOₓ et/ou réduisant le taux de formation d'émissions de CO ou de NOₓ résultant de la combustion dans la chambre de combustion, dans lequel le revêtement chimiquement adhérent peut être obtenu par dépôt électrolytique de plasma depuis une solution électrolytique comprenant de l'eau, un sel ou un oxyacide de phosphore hydrosoluble et/ou hydrodispersable, et H₂TiF₆, dans lequel les parties du métal étant revêtues sont reliées en tant qu'anode et du courant continu pulsé est utilisé.

2. Moteur selon la revendication 1 comprenant en outre un système d'échappement s'étendant du collecteur d'échappement à un tuyau d'échappement dans lequel au moins une partie des surfaces internes du système d'échappement sont en aluminium, en alliage d'aluminium, en titane ou en alliage de titane revêtu dudit revêtement chimiquement adhérent.

3. Moteur selon l'une quelconque des revendications 1 ou 2 comprenant une chambre de combustion ayant au moins une surface en aluminium, en alliage d'aluminium, en titane ou en alliage de titane, au moins une partie de ladite surface sur laquelle est déposé un revêtement comprenant au moins 25 % en poids de TiO₂ dans une épaisseur de couche de telle sorte que pendant le fonctionnement dudit moteur, les émissions de gaz d'échappement de HC, de CO et/ou de NOₓ provenant de la chambre de combustion sont inférieures auxdites émissions d'un moteur similaire n'ayant aucun revêtement en dioxyde de titane sur les surfaces de la chambre de combustion.

4. Moteur selon l'une quelconque des revendications 1 à 3, dans lequel les surfaces métalliques revêtues ayant un revêtement chimiquement adhérent comprenant du TiO₂ sont des surfaces polies ayant un Ra de 0,01 à 1,0 micron.

5. Moteur selon l'une quelconque des revendications 1 à 4, comprenant en outre un dopant dans et/ou sur le revêtement chimiquement adhérent comprenant du TiO₂.

6. Utilisation d'un revêtement chimiquement adhérent comprenant du TiO₂ sur les surfaces internes d'un moteur à combustion interne comprenant de l'aluminium ou du titane et positionné de telle sorte que, pendant le fonctionnement dudit moteur, de l'air d'admission, du mélange carburant/air et/ou du gaz d'échappement viennent au contact dudit revêtement chimiquement adhérent comprenant du TiO₂ augmente ainsi le taux de décomposition de HC, de CO ou de NOₓ et/ou réduit le taux de formation d'émissions de CO ou de NOₓ résultant de la combustion dans le moteur, dans lequel ledit revêtement chimiquement adhérent peut être obtenu par dépôt électrolytique de plasma d'une solution électrolyte comprenant de l'eau, un sel ou acide oxyphorique hydrosoluble et/ou hydrodispersable et H₂TiF₆ dans lequel les parties du métal étant revêtues sont reliées en tant qu'anode et du courant continu pulsé est utilisé.
